Europäisches Patentamt

European Patent Office

Office européen des brevets

(11) Publication number: **0 147 840**
**B1**

(12) **EUROPEAN PATENT SPECIFICATION**

(45) Date of publication of patent specification: **24.08.88**

(51) Int. Cl.⁴: **H 02 M 3/335**

(21) Application number: **84116205.0**

(22) Date of filing: **22.12.84**

(54) **Transformer power supply with a modulated pulse width voltage input.**

(30) Priority: **30.12.83 US 567432**

(43) Date of publication of application:
**10.07.85 Bulletin 85/28**

(45) Publication of the grant of the patent:
**24.08.88 Bulletin 88/34**

(84) Designated Contracting States:
**BE DE FR GB IT NL SE**

(56) References cited:
**FR-A-2 036 794**
**US-A-3 143 403**
**US-A-4 400 767**

**J. Wüstenhube:Schaltnetzteile, 2. Auflage,**
**1982, Expert Verlag Grafenau, pages 173-182.**

(73) Proprietor: **HONEYWELL INC.**
**Honeywell Plaza**
**Minneapolis Minnesota 55408 (US)**

(72) Inventor: **Adams, John T.**
**5226 - 13th Avenue South**
**Minneapolis Minn. 55417 (US)**
Inventor: **Kompelien, Arlon D.**
**6329 Thomas Avenue South**
**Richfield Minn. 55423 (US)**

(74) Representative: **Rentzsch, Heinz et al**
**Honeywell Europe S.A. Holding KG Patent- und**
**Lizenzabteilung Kaiserleistrasse 55**
**D-6050 Offenbach am Main (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Power supplies for ionization type loads such as electrostatic air cleaners having long been made by iron core and wire windings connected to a normal 110 volt 60 cycle voltage source. Such power supplies are not only expensive, but must be tailored to a particular load range.

US—A—4400767 show a self-start fly-back power supply according to the general portion of claim 1 for generating two stabilized low DC voltages of 5V and 24V feeding several circuits in a computer. The output voltages are compared with reference voltages and depending on the error between the actual value and the setpoint of the output voltage, the frequency of the oscillator feeding the primary winding of the transformer is changed therewith increasing or decreasing the energy fed into the primary winding. In the specification of this U.S. patent it is also mentioned with reference to the prior art that instead of changing the frequency of the pulses a pulse sequence with fixed frequency may be used with the pulses having variable width.

For protecting the high voltage power supply of an electrostatic air cleaner against damage caused by short circuit, the high voltage generator in FR—A—2036794 includes a current limiting circuit in a negative feedback loop which is connected to the secondary winding of a medium voltage transformer provided at the input of the high voltage generator and leads back to a controlled amplifier provided in the chain between a low voltage DC source and a blocking oscillator feeding the primary winding of said medium voltage transformer. The feedback loop includes a measuring circuit comprising a zener diode and two resistors connected in series together with a capacitor connected in parallel to said series circuit. A first feedback voltage derived from one of those resistors is fed to a first control amplifier supplying a control voltage to the amplifier between the low voltage source and the blocking oscillator. This first feedback voltage dependent on the output voltage of said transformer acts as the normal negative feedback voltage for stabilizing the output signal. A second voltage is derived from the above-mentioned circuit and is fed to a second control amplifier which delivers an output signal preventing the blocking oscillator from generating an output voltage if the current fed into the measuring circuit exceeds a predetermined limit.

It is the object of the present invention to provide a controllable power supply with improved protection against exceptional current and/or voltage supply to the load. This is achieved by the invention as characterized in claim 1. The invention is an improvement to a fly-back bifilar primary winding transformer which is powered by a pulsating 25 kilohertz source to provide an output voltage to a load of a wide range such as various sizes of electrostatic air cleaners. The voltage output to the load is controlled by modulating the puse width of the voltage input to the transformer depending up on the output voltage and current delivered to the load. The power supply has a backup overload sensing circuit for limiting the pulse width should the output current delivered to the load rapidly increase. Further features and preferred details of the invention are described in claim 2. One embodiment is shown in the drawing, where,

Figure 1 is a circuit diagram of the power supply;

Figure 2 is a graphical representation of the voltages and pulse width modulation voltage of the power supply; and

Figure 3 is a circuit diagram of a portion of the integrated circuit.

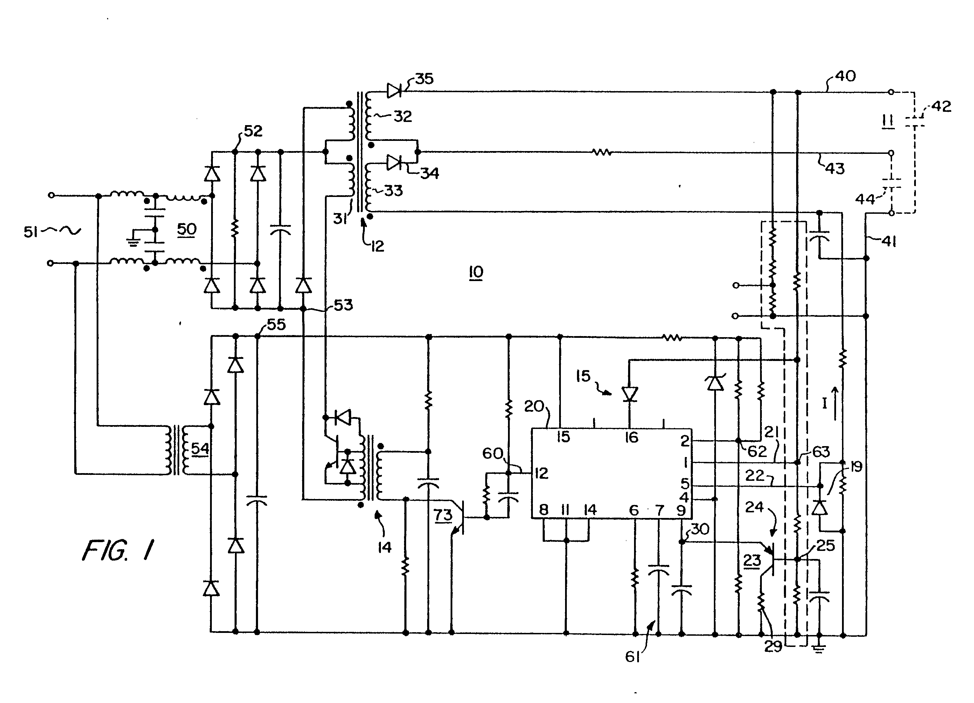

Referring to Figure 1, a pulse-width modulation fly-back transformer power supply 10 is disclosed for supplying power to a load 11 which might be an electrostatic air cleaner having an ionization unit and a collection section of the type shown in US—A—3,143,403.

The output windings 32 and 33 of a fly-back transformer 12 are connected to load 11. The primary winding 31 of the transformer 12 is connected to a pulse-width modulation circuit controlled by an isolation transformer 14 furnishing pulses at approximatively 25 kilohertz of varying widths depending upon input signals to inputs 21 and 22 of apulse width modulation IC 20. The input circuit 21 receives a signal indicative of the voltage output to load 11 over a voltage divider tap at 63. Input circuit 22 receives an output indicative of the current I of load 11.

The power supply has a reference voltage source in IC 20 for limiting the width of the pulses to transformer 12 and thus the output to load 11 for both a maximum voltage and a maximum current. The backup limiting circuit 23 comprises a transistor 24 which is biased by a voltage at 25. Upon a voltage appearing at 30 in excess of a voltage proportional to the voltage output of the transformer, transistor 24 conducts to ground through resistance 29 to limit the pulse width of isolation transformer 14 to transformer 12.

Specifically, transformer 12 has a bifilar primary winding 31 and a pair of secondary windings 32 and 33 which are interconnected with diodes 34 and 35 to supply voltage to load 11. Load 11 is an electrostatic air cleaner, the ionization unit being connected between conductor 40 and ground 41 and producing a load 42. The collector is connected between conductor 43 and ground 41 producing a second load 44.

The input to transformer 12 is biased by a DC power supply 50 connected to a conventional alternating power source 51 to furnish approximatively 180 volts DC between terminal 52 and 53. A second power supply 54 is also connected to AC source 51 and furnishes 15 volt DC at terminal 55 to various portions of the circuit of the power supply.

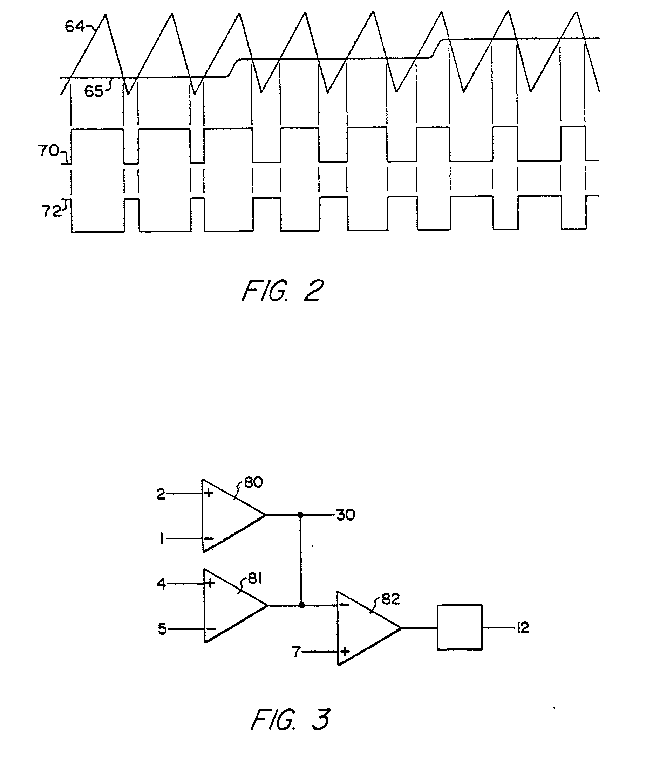

The output of the pulse-width modulating IC 20 (No. LM3524 manufactured by National Semiconductor) on conductor 60 is brought about by the combined effects of the input of the combined voltage and current signals and the 25 kilohertz oscillator controlled by capacitor 61. A transconductance error amplifier combines the 2.9 volt reference at terminal 62 with the input signal at 21 to provide a signal indicative of load voltage. A second transconductance error amplifier uses the input signal at 22 to provide a signal indicative of load current I. The combined amplifier signals provide an error signal 65, shown in Figure 2, at 30 which combines with the 25 kilohertz oscillator to provide an output pulse schematically shown as curve 70 in Figure 2.

Specifically, referring to Figure 2, the oscillator output is shown as the generated sawtooth voltage 64 and the error signal is shown by voltage 65 providing the pulse-width generated signal 70 from the IC 20 at conductor 60 of Figure 1. In the circuit of Figure 1 the transistor in an inversion circuit *73* reverses or inverts pulse-width signal 70 of Figure to the form shown at 72. This signal 70, when applied to the transformer 12 through isolation transformer 14, generates the output voltage to load *11*.

As shwon in Figure 3, a portion of IC 20 is shown as in pages 1—115 of the 1980 Linear Databook of National Semiconductor. A transconductance error amplifier 80 receives inputs of reference 62 and voltage indicative signal at 21 and a transconductance error amplifier 81 receives inputs of a grounded reference and current indicative signal at 22. The error amplifier outputs 65 are combined at 30 to be compared by comparator 82 with the oscillator controlled by capacitor 61 whose output appears at 7. Comparator 82 has a pulsing output 70 at 12. Normally the output to the load, which might range between 2.2 milliamperes to .2 milliamperes for various types of air cleaners is limited by the reference voltages at 21 and 22 to increase or decrease the pulse-width to transformer 12. This limits the voltage and/or current delivered to load *11* by the transformer 12.

Circuit *23* provides a backup to limit voltage and/or current delivered to the load. As previouxaly mentioned, the combined error output voltage 65 can be limited by transistor 24 when the error voltage is applied to terminal 30. For a maximum power supply output as transformer 12, the maximum pulse-width, determined by error output 65 at 30, is known. Transistor 24 is biased by the voltage at 25 to cause responsive circuit *23* (of Figure 1) to limit the voltage 65 (of figure 2) at 30. This limits the current output of transformer 12 to the load as a backup to the primary current limiter signal at 22. A rapid increase in the current at load *11* causes the reference voltage at 25 to decrease drastically limiting the pulse-width by shorting out the error voltage from terminal 30 to ground. Such a backup current limiting feature provides a safety feature to prevent a hazardous condition should portions of the normal voltage and current limiting circuit fail to limit the output of fly-back transformer 12.

## Claims

1. A power supply apparatus for electrical loads comprising

a) a fly-back transformer (12) having a bifilar input winding (31) and two secondary windings (32, 33) connected to the load (11);

b) an oscillator circuit (20) providing a high frequency sawtooth output signal (64),

c) normal error circuit means (20—22) providing a D.C. voltage error signal (65) proportional to outputs of said secondary windings (32, 33);

d) circuit means receiving said error output signal (65) and said high frequency sawtooth output signal (64) to produce a control signal (72) depending on the magnitude of said error output signals;

e) means (14, 53) connecting said control signal (72) to said bifilar input winding (31) of said transformer (12); characterized in that

f) a first secondary winding (33) of the fly-back transformer (12) is connected to the collector section (44) of an electrostatic air cleaner and the second secondary winding (32) is connected to the ionizer unit (42) of the air cleaner;

g) the normal error circuit means includes

g1) means (8) for deriving an input signal depending on the voltage across the load (11);

g2) means (81) for deriving an input signal depending on the load current (I);

g3) circuit means (20, 82) for combining the two input signals and deriving the error signal (65 at 30);

h) the control signal (72) is a high frequency pulsing signal having a constant frequency and a pulse width depending on the magnitude of said error output signal;

i) a back-up responsive circuit (23) for limiting said error signal (65) includes a transistor (24) biased by a voltage (at 25) proportional to the voltage output of said transformer (12) so that when the output voltage of said transformer decreases the limit for said pulse width is decreased thereby limiting the output current of said transformer.

2. Apparatus according to claim 1, characterized in that said circuit means (20) includes a comparator (82) to compare said error signal (65 at 30) with said oscillator output signal (64 at 7) to produce a pulsing signal (72) having a frequency corresponding to that of the oscillator and having pulse width inversely proportional to the magnitude of said error signal.

## Patentansprüche

1. Stromversorgungsgerät für elektrische Lasten mit

a) einem Rücklauftransformator (12), der eine bifilare Primärwicklung (31) sowie zwei an die Last (11) angeschlossene Sekundärwicklungen (32, 33) aufweist;

b) einem ein hochfrequentes Sägezahn-Ausgangssignal (64) liefernden Oszillator (20);

c) einem normalen Fehlerschaltkreis (20—22), der ein dem Ausgangssignal der Sekundärwicklungen (32, 33) proportionales Fehler-Gleichstromsignal (65) liefert;

d) einer Schaltungsanordnung, welcher das Fehlersignal (65) und das hochfrequente Sägezahn-Ausgangssignal (64) zugeführt sind und die ein von der Größe des Fehlersignales abhängiges Steuersignal (72) erzeugt;

e) einer Einrichtung (14, 53), welche des Steuersignal (72) der bifilaren Primärwicklung (31) des Transformators (12) zuleitet;
dadurch gekennzeichnet, daß

f) eine erste Sekundärwicklung (33) des Rücklauftransformators (12) an den Kollektorboreich (44) eines elektrostatischen Luftfilters angeschlossen und die zweite Sekundärwicklung (32) mit dem Ionisationsbereich (42) des Luftfilters verbunden ist;

g) der normale Fehlerschlatkreis umfaßt

g1) eine Einrichtung (80) zum Erzeugen eines Eingangssignals, welches von der Spannung an der Last (11) abhängt;

g2) ein Einrichtung (81) zum Erzeugen eines Eingangssignals, welches vom Strom (I) durch die Last abhängt;

g3) eine Einrichtung (80, 82) zum Kombinieren der beiden Eingangssignale und Erzeugen des Fehlersignals (65 an 30);

h) das Steuersignal (72) ein hochfrequentes Impulssignal mit konstanter Frequenz ist, dessen Pulsbreite vom Betrag des Fehlersignals abhängt;

i) ein Unterstützungsstromkreis (23) zur Begrenzung des Fehlersignals (65) einen Transistor (24) enthält, der durch eine Spannung (an 25) proportional zur Ausgangspannung des Transformators (12) vorgespannt ist, so daß bei einen Abfall der Transformatorausgangsspannung der Grenzwert der Impulsbreite verringert und somit der Ausgangsstrom des Transformators begrenzt wird.

2. Gerät nach Anspruch 1, dadurch gekennzeichnet, daß die Schaltung (20) einen Vergleicher (82) enthält, der das Fehlersignal (65 an 30) mit dem Oszillatorausgangssignal (64 an 7) vergleicht und ein Impulssignal (72) erzeugt, dessen Frequenz der Oszillatorfrequenz entspricht und dessen Impulsbreite dem Betrag des Fehlersignals umgekehrt proportional ist.

**Revendications**

1. Un appareil d'alimentation pour charges électriques comprenant

a) un transformateur à retour (12) ayant un enroulement d'entrée bifilaire (31) et deux enroulements secondaires (32, 33) connectés à la charge (11);

b) Un circuit oscillant (20) fournissant un signal de sortie en dents de scie de haute fréquence (64);

c) un moyen (20—22) de circuit d'erreur normal fournissant un signal d'erreur en tension continue (65) proportionnel aux sorties desdits enroulements secondaires (32, 33);

d) un moyen de circuit recevant ledit signal de sortie d'erreur (65) et ledit signal de sortie en dents de scie de haute fréquence (64) pour produire un signal de commande (72) dépendant de l'amplitude desdits signaux de sortie d'erreur;

e) un moyen (14, 53) connectant ledit signal de commande (72) audit enroulement d'entrée bifilaire (31) de ce transformateur (12); caractérisé en ce qu'

f) un premier enroulement secondaire (33) du transformateur à retour (12) est connecté à une section de collecteur (44) d'un épurateur d'air électrostatique et le second enroulement secondaire (32) est connecté à l'unité d'ionisation (42) de l'épurateur d'air

g) le moyen de circuit d'erreur normal comporte

g1) un moyen (80) pour dériver un signal d'entrée en fonction de la tension aux bornes de la charge (11);

g2) un moyen (81) pour dériver un signal d'entrée en fonction du courant de la charge (I).

g3) un moyen de circuit (20, 82) pour combiner les deux signaux d'entrée et dériver un signal d'erreur (65 en 30);

h) le signal de commande (72) est un signal d'impulsion de haute fréquence ayant une fréquence constante et une largeur d'impulsion fonction de l'amplitude dudit signal de sortie d'erreur;

i) un circuit sensible de sécurité (23) pour limiter ledit signal d'erreur (65) comporte un transistor (24) polarisé par une tension (en 25) proportionelle à la tension de sortie dudit transformateur (12) de sorte que lorsque la tension de sortie dudit transformateur décroît la limite de ladite largeur d'impulsion décroît limitant de ce fait le courant de sortie dudit transformateur.

2. Appareil selon la revendication 1, caractérisé en ce que ledit moyen de circuit (20) comporte un comparateur (82) pour comparer ledit signal d'erreur (65 en 30) audit signal de sortie d'un oscillateur (64 en 7) pour produire un signal d'impulsions (72) ayant une fréquence correspondant à celle de l'oscillateur et ayant une largeur d'impulsion inversement proportionnelle à l'amplitude dudit signal d'erreur.

FIG. 1

0 147 840

FIG. 2

FIG. 3